# EUROPEAN PATENT APPLICATION

(11) **EP 3 604 464 A1**
(43) Date of publication of application: **05.02.2020**
(21) Application number: 18770985.2
(22) Date of filing: 22.03.2018
(51) Int. Cl.: C09D 133/16, C08F 20/26, C09D 133/04, C09K 3/00, C09K 3/18

(54) **SURFACE TREATMENT AGENT AND METHOD FOR PRODUCING SAME**

(30) Priority: 23.03.2017 JP 2017057209; 17.10.2017 JP 2017201349; 18.10.2017 JP 2017201995
(71) Applicant: Neos Co., Ltd., Kobe-shi, Hyogo 650-0001 (JP)
(72) Inventor: HIRAMATSU, Shinji, Konan-shi Shiga 520-3213 (JP); SAKUDO, Takeru, Konan-shi Shiga 520-3213 (JP); MIYATA, Koji, Konan-shi Shiga 520-3213 (JP); ENAMI, Tsubasa, Konan-shi Shiga 520-3213 (JP); SUGATA, Chiyoshi, Konan-shi Shiga 520-3213 (JP)
(74) Representative: Müller-Boré & Partner Patentanwälte PartG mbB
(86) International application number: PCT/JP2018/011499
(87) International publication number: WO 2018/174190

(57) **Abstract**

A surface treatment agent comprising a polymer according to any one of the following formulae (I) to (III):
(I) a polymer comprising, as a recurring unit, at least one linear hydrocarbon group-containing monomer represented by general formula (I):

CH₃-(CH₂)_{N}-OC (=O)-CR^{1A}=CH₂ (I)

wherein R^{1A} is H or methyl and N is 1 to 24;
(II) a polymer comprising, as a recurring unit, at least one fluorine-containing monomer represented by general formula (II):

RFO-R^{1B}-OC(=O)-CR²=CH₂ (II)

wherein RF is a group represented by the following formula (1) or (2) : 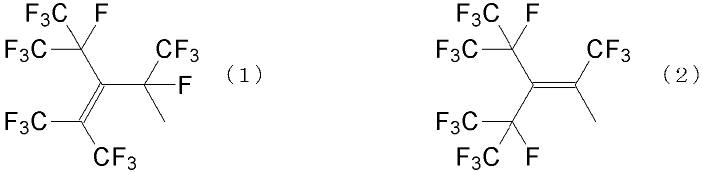 R^{1B} is a divalent group having a carbon atom number of 2 to 50,
and R² is H or methyl, and
the proportion of the fluorine-containing monomer being 15% or more on a mass basis; and
(III) a polymer comprising, as a recurring unit, the at least one linear hydrocarbon group-containing monomer represented by general formula (I) and the at least one fluorine-containing monomer represented by general formula (II), and
the proportion of the fluorine-containing monomer being 0% or more to 15% or less on a mass basis.

## Description

### Technical Field

The present invention relates to a surface treatment agent and a method for producing the same. In particular, the present invention relates to a surface treatment agent containing a polymer useful as a mold-releasing agent, a water and oil repellent, a buffer, and a resin adhesion prevention agent, for rubbers and resins including FRP; and a method for producing the same.

### Background Art

Fluorine-containing (meth)acrylic-based polymers obtained by polymerizing a fluorine-containing monomer containing a perfluoroalkyl group having a carbon atom number of 8 or more have been used as surface treatment agents to exhibit surface functionality, such as mold releasability, water and oil repellency, and low surface tension (Patent Literature 1). Compounds containing a perfluoroalkyl group having a carbon atom number of 8 or more recently have a problem of generating perfluorooctanoic acid (PFOA), perfluorooctane sulfonic acid (PFOS), etc., by decomposition after disposal, and substitution for compounds containing a perfluoroalkyl group having a carbon number of 6 or less has been promoted. However, compounds containing a perfluoroalkyl group having a carbon atom number of 6 or less do not exhibit crystallinity like compounds containing a perfluoroalkyl group having a carbon atom number of 8 or more, which causes a novel problem of poor surface functionality, such as mold releasability, water and oil repellency, and low surface tension. For example, when a fluorine-containing polymer containing a perfluoroalkyl group having a carbon number of 6 or less is used as a mold-releasing agent, single application of the fluorine-containing polymer does not ensure sufficient multiple mold-releasing properties (continued mold releasability) (e.g., Patent Literature 2).

Patent Literature 3 discloses production of a curing film using a surface modifier that contains a condensed hydroxy fatty acid and a fluorine-containing copolymer having a fluorine content of 1 to 10% on a mass basis.

### Citation List

### Patent Literature

PTL 1: JP1991-256310A
PTL 2: WO2009/119445
PTL 3: JP2016-44210A

### Summary of Invention

### Technical Problem

An object of the present invention is to provide a surface treatment agent having excellent surface functionality, such as water and oil repellency, mold releasability, shock-absorbing properties, and resin adhesion prevention properties, and excellent continued mold releasability; and a method for producing the surface treatment agent.

### Solution to Problem

The present invention provides the following surface treatment agent and method for producing the same.
Item 1. A surface treatment agent comprising a polymer according to any one of the following formulae (I) to (III):
   (I) a polymer comprising, as a recurring unit, at least one linear hydrocarbon group-containing monomer represented by general formula (I):

      CH₃-(CH₂)_{N}-OC(=O)-CR^{1A}=CH₂ (I)

      wherein R^{1A} is H or methyl and N is 1 to 24;
   (II) a polymer comprising, as a recurring unit, at least one fluorine-containing monomer represented by general formula (II):

      RFO-R^{1B}-OC(=O)-CR²= CH₂ (II)

      wherein RF is a group represented by the following formula (1) or (2), 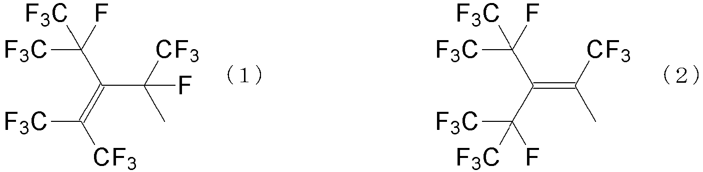 R^{1B} is a divalent group having a carbon atom number of 2 to 50, and R² is H or methyl, and
      the proportion of the fluorine-containing monomer being 15% or more on a mass basis; and
   (III) a polymer comprising, as a recurring unit, the at least one linear hydrocarbon group-containing monomer represented by general formula (I) and the at least one fluorine-containing monomer represented by general formula (II), and
      the proportion of the fluorine-containing monomer being 0% or more to 15% or less on a mass basis.
Item 2. The surface treatment agent according to Item 1, comprising a polymer according to the following formula (I) or (III) :
   (I) a polymer comprising, as a recurring unit, at least one linear hydrocarbon group-containing monomer represented by general formula (I):

      CH₃-(CH₂)_{N}-OC(=O)-CR^{1A}=CH₂ (I)

      wherein R^{1A} is H or methyl and N is 1 to 24; or
   (III) a polymer comprising, as a recurring unit, the at least one linear hydrocarbon group-containing monomer represented by general formula (I) and the at least one fluorine-containing monomer represented by general formula (II) above, and
      the proportion of the fluorine-containing monomer being 0% or more to 15% or less on a mass basis.
Item 3. The surface treatment agent according to Item 1, comprising a polymer according to the following formula (II):
   (II) a polymer comprising, as a recurring unit, at least one fluorine-containing monomer represented by general formula (II):

   RFO-R^{1B}-OC(=O)-CR²=CH₂ (II)

   wherein RF is a group represented by the following formula (1) or (2) : 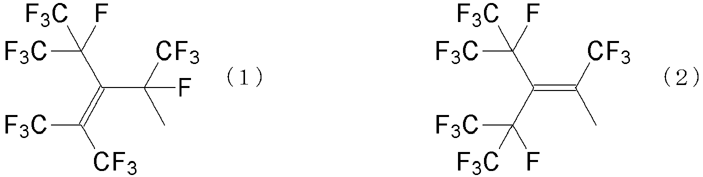 R^{1B} is a divalent group having a carbon atom number of 2 to 50, and R² is H or methyl, and
   the proportion of the fluorine-containing monomer being 15% or more on a mass basis.
Item 4. The surface treatment agent according to Item 2, wherein the polymer comprises, as a recurring unit,
   the linear hydrocarbon group-containing monomer represented by general formula (I),
   (A) the fluorine-containing monomer represented by general formula (II), and/or
   (B) a hydrophilic group-containing monomer.
Item 5. The surface treatment agent according to Item 3, wherein the polymer is a copolymer comprising, as a recurring unit, the fluorine-containing monomer represented by general formula (II) and the following monomers (A), (B), and/or (C):
   (A) a linear hydrocarbon group-containing monomer,
   (B) a hydrophilic group-containing monomer, and/or
   (C) at least one monomer selected from the group consisting of branched hydrocarbon group-containing monomers, alicyclic hydrocarbon group-containing monomers, hetero-aliphatic group-containing or hetero-ring-containing monomers, and aromatic ring-containing monomers.
Item 6. The surface treatment agent according to any one of Items 1 to 5, wherein the linear hydrocarbon group-containing monomer represented by general formula (I) includes one or more (meth)acrylates.
Item 7. The surface treatment agent according to Item 1 or 2, wherein the linear hydrocarbon group-containing monomer (A) includes one or more (meth)acrylates represented by general formula (I):

   (CH₃)-(CH₂)_{N}-OC(=O)-CR^{1A}=CH₂ (I)

   wherein R^{1A} is H or methyl and N is 1 to 24.
Item 8. The surface treatment agent according to Item 4 or 5, wherein the hydrophilic group-containing monomer (B) is a monomer having a hydroxy group and/or a polyethylene oxide chain.
Item 9. The surface treatment agent according to any one of Items 1 to 8, which is an aqueous emulsion.
Item 10. The surface treatment agent according to any one of Items 1 to 9, wherein the surface treatment agent is a mold-releasing agent.
Item 11. The surface treatment agent according to Item 10, wherein the surface treatment agent is a mold-releasing agent for butadiene rubber (BR).
Item 12. The surface treatment agent according to Item 10, wherein the surface treatment agent is a mold-releasing agent for butadiene rubber (BR) or EPDM rubber.
Item 13. The surface treatment agent according to Item 10, wherein the surface treatment agent is a mold-releasing agent for thermosetting resins.
Item 14. The surface treatment agent according to any one of Items 1 to 9, wherein the surface treatment agent is a water and oil repellent agent.
Item 15. The surface treatment agent according to any one of Items 1 to 9, wherein the surface treatment agent is a buffer. Item 16. The surface treatment agent according to any one of Items 1 to 9, wherein the surface treatment agent is a resin adhesion prevention agent.
Item 17. A method for producing a surface treatment agent, comprising the step of polymerizing a linear hydrocarbon group-containing monomer represented by general formula (I):

   CH₃-(CH₂)N-OC(=O)-CR^{1A}=CH₂ (I)

   wherein R^{1A} is H or methyl and N is 1 to 24, optionally with
   (A) a fluorine-containing monomer represented by general formula (II):

      RFO-R^{1B}-OC(=O)-CR²=CH₂ (II)

      wherein RF is a group represented by the following formula (1) or (2), 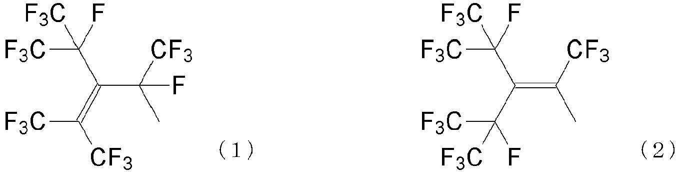 R^{1B} is a divalent group having a carbon atom number of 2 to 50, and R² is H or methyl, and
      the proportion of the fluorine-containing monomer in the polymer being 0% or more to 15% or less on a mass basis; and/or
   (B) a hydrophilic group-containing monomer.
Item 18. A method for producing a surface treatment agent, comprising:
   the step of homopolymerizing a fluorine-containing monomer represented by general formula (II):

      RFO-R^{1B}-OC(=O)-CR²=CH₂ (II)

      wherein RF is a group represented by formula (1) of (2): 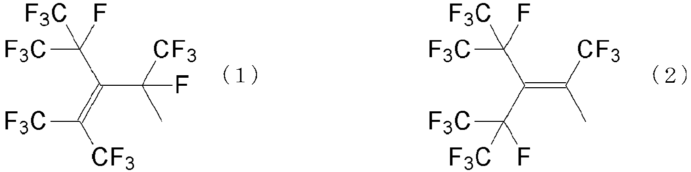 R^{1B} is a divalent group having a carbon atom number of 2 to 50, and R² is H or methyl, or
   the step of copolymerizing the fluorine-containing monomer with (A) a linear hydrocarbon group-containing monomer, (B) a hydrophilic group-containing monomer, and/or (C) at least one monomer selected from the group consisting of branched hydrocarbon group-containing monomers, alicyclic hydrocarbon group-containing monomers, hetero-aliphatic group-containing or hetero-ring-containing monomers, and aromatic ring-containing monomers, to obtain a polymer comprising the fluorine-containing monomer as a recurring unit, wherein the proportion of the fluorine-containing monomer in the polymer is 15 mass% or more.

### Advantageous Effects of Invention

The surface treatment agent of the present invention exhibits excellent surface functionality, such as mold releasability, water and oil repellency, shock-absorbing properties, resin adhesion prevention properties, and low surface tension. In particular, when used as a mold-releasing agent for resins and rubbers, including EPDM rubber and butadiene rubber, the surface treatment agent of the present invention is useful as a mold-releasing agent exhibiting excellent mold releasability and continued mold releasability. The surface treatment agent of the present invention is also useful as a buffer or resin adhesion prevention agent that is suitably used for resin molding or processing of composite materials such as FRP.

### Brief Description of Drawings

Fig. 1 shows an outline of a mold releasability test on a vinyl ester resin using test pieces.
Fig. 2 shows an embodiment in which the surface treatment agent of the present invention is used as a buffer.

### Description of Embodiments

The term "(meth)acrylate" used in this specification means acrylate and/or methacrylate.

The surface treatment agent of the present invention comprises a polymer according to any one of the following formulae (I) to (III):
(I) a polymer comprising, as a recurring unit, at least one linear hydrocarbon group-containing monomer represented by general formula (I):

   CH₃-(CH₂)_{N}-OC(=O)-CR^{1A}=CH₂ (I)

   wherein R^{1A} is H or methyl and N is 1 to 24;
(II) a polymer comprising, as a recurring unit, at least one fluorine-containing monomer represented by general formula (II):

   RFO-R^{1B}-OC(=O)-CR²=CH₂ (I I)

   wherein RF is a group represented by the following formula (1) or (2) : 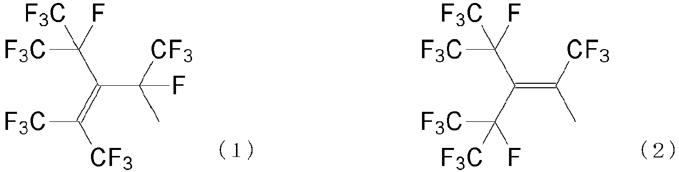 wherein R^{1B} is a divalent group having a carbon atom number of 2 to 50 and R² is H or methyl, and the proportion of the fluorine-containing monomer being 15% or more on a mass basis, and (III) a polymer comprising, as a recurring unit, the at least one linear hydrocarbon group-containing monomer represented by general formula (I) and the at least one fluorine-containing monomer represented by general formula (II), and the proportion of the fluorine-containing monomer being 0% or more to 15% or less on a mass basis.

### Linear hydrocarbon group-containing monomer

Examples of linear hydrocarbon group-containing monomers include one or more (meth)acrylates having a linear hydrocarbon group represented by general formula (I):

CH₃-(CH₂)_{N}-OC(=O)-CR^{1A}=CH₂ (I)

wherein R^{1A} is H or methyl and N is 1 to 24.

R^{1A} is H or methyl and preferably methyl.

N is 1 to 24, preferably 3 to 22, and more preferably 5 to 22.

Specific examples of linear hydrocarbon group-containing monomers include ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, heneicosyl (meth)acrylate, docosyl (meth)acrylate, tricosyl (meth)acrylate, tetracosyl (meth)acrylate, and pentacosyl (meth)acrylate. The linear hydrocarbon group-containing monomers may be used alone or in a combination of two or more. Preferable examples of linear hydrocarbon group-containing monomers include hexyl methacrylate, laurylacrylate, stearyl methacrylate, and lauryl methacrylate.

The linear hydrocarbon group-containing monomer can be produced by a known method or can be obtained from commercially available products.

### Fluorine-containing monomer represented by general formula (II)

The fluorine-containing monomer represented by general formula (II) is shown below:

RFO-R^{1B}-OC(=O)-CR²=CH₂ (11)

wherein RF is a group represented by the following formula (1) or (2) :

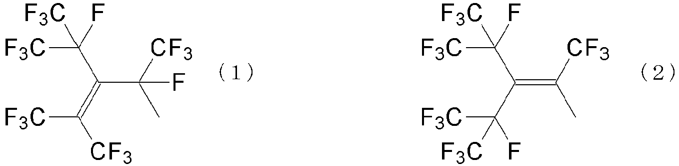

R^{1B} is a divalent group having a carbon atom number of 2 to 50, and R² is H or methyl.

The C₂₋₅₀ divalent group represented by R^{1B} may include a hetero atom or may be an aromatic group, a hetero aromatic group, a heterocyclic group, an aliphatic group, or an alicyclic group. Specific examples include the following.

-(CH₂)_{N1}-

(N1=2 to 50)

-X-Y-(CH₂)_{N2}-

(N2=2 to 43)

-X-(CH₂)_{N3}-

(N3=1 to 44)

-CH₂CH₂(OCH₂CH₂)_{N4}-

(N4=1 to 24)

-XCO (OCH₂CH₂)_{N5}-

(N5=1 to 21)

In the formulae, X represents phenylene, biphenylene, or naphthylene having 1 to 3 substituents selected from the group consisting of C₁₋₃ alkyl (methyl, ethyl, or propyl), C₁₋₄ alkoxy (e.g., methoxy, ethoxy, propoxy, butoxy), and halogen atoms (F, CL, BR, I); and Y represents -O-CO-, -CO-O-, -CONH-, or -NHCO-.

X is preferably 1,2-phenylene, 1,3-phenylene, and 1,4-phenylene, and particularly preferably 1,4-phenylene.

Particularly preferable examples of C₂₋₅₀ divalent groups represented by R^{1B} include those having the following structures.

-(CH₂)_{N1}-

(N1=2 to 10)

-C₆H₄OCO(CH₂)_{N2}-

(N2=2 to 10)

-C₆H₄(CH₂)_{N3}-

(N3=1 to 10)

-CH₂CH₂(OCH₂CH₂)_{N4}-

(N4=1 to 10)

-C₆H₄CO (OCH₂CH₂)_{N5}-

(N5=1 to 10)
R² is H or methyl, and preferably methyl.

The fluorine-containing monomer represented by general formula (II) can be produced by a known method. The fluorine-containing monomers may be used alone or in a combination of two or more.

### Hydrophilic group-containing monomer

The hydrophilic group-containing monomer is preferably a monomer having a hydroxy group and/or a polyethylene oxide chain. Examples include C₁₋₄ hydroxyalkyl (meth)acrylate, polyethylene glycol mono(meth)acrylate, polypropylene glycol mono(meth)acrylate, etc. More specifically, 2-hydroxyethyl (meth)acrylate, 2-hydroxypropyl (meth)acrylate, 2-hydroxybutyl (meth)acrylate, and polyethylene glycol mono(meth)acrylate can be used. More preferable examples include 2-hydroxyethyl methacrylate and polyethylene glycol monomethacrylate. Examples of commercially available products of polyethylene glycol monomethacrylate include PE-90 and PE-200 produced by NOF Corporation.

The hydrophilic group-containing monomer can be produced by a known method or can be obtained from commercially available products.

### Branched hydrocarbon group-containing monomer

Examples of branched hydrocarbon group-containing monomers include isopropyl (meth)acrylate, SEC-butyl (meth)acrylate, isobutyl (meth)acrylate, tert-butyl (meth)acrylate, isopentyl (meth)acrylate, isohexyl (meth)acrylate, isoheptyl (meth)acrylate, 2-ethylhexyl (meth)acrylate, isononyl (meth)acrylate, isodecyl (meth)acrylate, isoundecyl (meth)acrylate, isododecyl (meth)acrylate, isotridecyl (meth)acrylate, isotetradecyl (meth)acrylate, isopentadecyl (meth)acrylate, isopalmityl (meth)acrylate, isoheptadecyl (meth)acrylate, and isostearyl (meth)acrylate, and isoamyl (meth)acrylate. The branched hydrocarbon group-containing monomers may be used alone or in a combination of two or more. Preferable examples of branched hydrocarbon group-containing monomers include 2-ethylhexyl methacrylate, isooctyl methacrylate, isodecyl methacrylate, isostearyl methacrylate, isononyl acrylate, tert-butyl methacrylate, isobutyl methacrylate, and isoamyl acrylate.

The monomer having a branched hydrocarbon group can be produced by a known method or can be obtained from commercially available products.

### Alicyclic hydrocarbon group-containing monomer

Examples of alicyclic hydrocarbon group-containing monomers include cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, decalinyl (meth)acrylate, isobornyl (meth)acrylate, dicyclopentanyl (meth)acrylate, dicyclopentenyl (meth)acrylate, adamantyl (meth)acrylate, cyclohexyl (meth)acrylate, and tert-butyl cyclohexyl (meth)acrylate. The alicyclic hydrocarbon group-containing monomers may be used alone or in a combination of two or more. Preferable examples of alicyclic hydrocarbon group-containing monomers include isobornyl methacrylate, isobornyl acrylate, dicyclopentanyl methacrylate, dicyclopentanyl acrylate, dicyclopentenyl methacrylate, dicyclopentenyl acrylate, adamantyl methacrylate, cyclohexyl methacrylate, and tert-butyl cyclohexyl methacrylate.

The alicyclic hydrocarbon group-containing monomer can be produced by a known method or can be obtained from commercially available products.

### Hetero-aliphatic group-containing or hetero-ring-containing monomer

Examples of hetero-aliphatic group-containing or hetero-ring-containing monomers include tetrahydrofurfuryl (meth)acrylate, phenoxyethyl (meth)acrylate, methoxyethyl (meth)acrylate, ethylcarbitol (meth)acrylate, glycidyl (meth)acrylate, methoxy polyethylene glycol (meth)acrylate, methoxy polypropylene glycol (meth)acrylate, 3,4-epoxycyclohexyl methyl (meth)acrylate, cyclic trimethylolpropane formal (meth)acrylate, (3-ethyl oxetane-3-yl)methyl (meth)acrylate, (2-methyl-2-ethyl-1,3-dioxolane-4-yl)methyl (meth)acrylate, dimethylaminoethyl (meth)acrylate, unsaturated fatty acid hydroxy alkyl ester modified ε-caprolactone, pentamethyl piperidinyl methacrylate, tetramethyl piperidinyl methacrylate, acryloyl morpholine, dimethylacrylamide, isopropylacrylamide, diethylacrylamide, dimethylaminopropyl acrylamide, etc. The hetero-aliphatic group-containing or hetero-ring-containing monomers can be used alone or in a combination of two or more. Preferable examples of hetero-aliphatic group-containing or hetero-ring-containing monomers include glycidyl methacrylate, diethylacrylamide, and ethylcarbitol acrylate.

The hetero-aliphatic group-containing or hetero-ring-containing monomers can be produced by a known method or obtained from commercially available products.

### Aromatic ring-containing monomers

Examples of aromatic ring-containing monomers include phenyl (meth)acrylate, hydroxyphenyl (meth)acrylate, chlorophenyl (meth)acrylate, benzyl (meth)acrylate, methoxybenzyl (meth)acrylate, chlorobenzyl (meth)acrylate, hydroxybenzyl (meth)acrylate, phenethyl (meth)acrylate, hydroxy phenethyl (meth)acrylate, phenoxymethyl (meth)acrylate, phenoxyethyl (meth)acrylate, dihydroxy phenethyl (meth)acrylate, and furfuryl (meth)acrylate. The aromatic ring-containing monomers can be used alone or in a combination of two or more. Preferable examples of aromatic ring-containing monomers include benzyl methacrylate, benzyl acrylate, and phenoxy ethyl methacrylate.

The monomer having an aromatic ring can be produced by a known method or obtained from commercially available products.

### First preferable embodiment

In the first preferable embodiment of the present invention, the polymer used in the surface treatment agent of the present invention comprises, as an essential component and as a recurring unit, a linear hydrocarbon group-containing monomer represented by general formula (I).

The polymer in the first embodiment may be a homopolymer of the linear hydrocarbon group-containing monomer represented by general formula (I) or a copolymer of the linear hydrocarbon group-containing monomer represented by formula (1) and other monomers. When the polymer is a homopolymer of the linear hydrocarbon group-containing monomer represented by general formula (I), the proportion of the fluorine-containing monomer in the polymer is 0% on a mass basis. Examples of other monomers include (A) fluorine-containing monomers represented by general formula (II) mentioned above and (B) hydrophilic group-containing monomers. In the first embodiment, the polymer of the present invention includes:
(1) a polymer of at least one linear hydrocarbon group-containing monomer represented by general formula (I),
(2) a copolymer of at least one linear hydrocarbon group-containing monomer represented by general formula (I) and at least one fluorine-containing monomer represented by general formula (II),
(3) a copolymer of at least one linear hydrocarbon group-containing monomer represented by general formula (I) and at least one hydrophilic group-containing monomer, and
(4) a copolymer of at least one linear hydrocarbon group-containing monomer represented by general formula (I), at least one fluorine-containing monomer represented by general formula (II), and at least one hydrophilic group-containing monomer.

In the first preferable embodiment, when the linear hydrocarbon group-containing monomer represented by general formula (I) is used, the amount is preferably 5 to 100%, and more preferably 10 to 90% on a mass basis relative to the total amount of the polymer to be obtained.

In the first preferable embodiment, the amount of the fluorine-containing monomer represented by general formula (II) is preferably 0 to 15%, more preferably 0 to 10%, and even more preferably 5 to 10% on a mass basis relative to the total amount of the polymer to be obtained.

In the first preferable embodiment, when the hydrophilic group-containing monomer is used, the amount is preferably 0 to 30%, and more preferably 0 to 20 % on a mass basis relative to the total amount of the polymer to be obtained.

### Second preferable embodiment

In the second preferable embodiment of the present invention, the polymer used in the fluorine-based surface treatment agent of the present invention may be a homopolymer of the fluorine-containing monomer represented by general formula (II), or a copolymer of the fluorine-containing monomer represented by general formula (II) and one or more monomers according to the following (A), (B), and/or (C):
(A) a linear hydrocarbon group-containing monomer,
(B) a hydrophilic group-containing monomer, and/or
(C) at least one monomer selected from the group consisting of branched hydrocarbon group-containing monomers, alicyclic hydrocarbon group-containing monomers, hetero-aliphatic group-containing or hetero-ring-containing monomers, and aromatic ring-containing monomers.

In the polymer used in the second preferable embodiment, the proportion of the fluorine-containing monomer represented by general formula (II) is 15% or more on a mass basis, and preferably exceeds 15%.

In the second preferable embodiment, when the linear hydrocarbon group-containing monomer represented by general formula (I) is used, the amount is preferably 0 to 70 parts by mass, and more preferably 0 to 50 parts by mass on the assumption that the total amount of the copolymer to be obtained is 100 parts by mass.

In the second preferable embodiment, the amount of the fluorine-containing monomer represented by general formula (II) is typically 15 to 100 parts by mass, preferably 15 to 95 parts by mass, and more preferably 15 to 90 parts by mass on the assumption that the total amount of the copolymer to be obtained is 100 parts by mass.

In the second preferable embodiment, when the hydrophilic group-containing monomer is used, the amount is preferably 0 t 30%, and more preferably 0 to 20% on a mass basis relative to the total amount of the copolymer to be obtained.

In the second preferable embodiment, when the branched hydrocarbon group-containing monomer is used, the amount is preferably 0 to 70%, and more preferably 0 to 50% on a mass basis relative to the total amount of the copolymer to be obtained.

In the second preferable embodiment, when the alicyclic hydrocarbon group-containing monomer is used, the amount is preferably 0 to 70%, and more preferably 0 to 50% on a mass basis relative to the total amount of the copolymer to be obtained.

In the second preferable embodiment, when the hetero-aliphatic group-containing or hetero-ring-containing monomer is used, the amount is preferably 0 to 70%, and more preferably 0 to 50% on a mass basis relative to the total amount of the copolymer to be obtained.

In the second preferable embodiment, when the aromatic ring-containing monomer is used, the amount is preferably 0 to 70%, and more preferably 0 to 50% on a mass basis relative to the total amount of the copolymer to be obtained.

By setting the amount of the fluorine-containing monomer to be used to 15% or more on a mass basis, an aqueous dispersion exhibiting excellent continued mold releasability can be formed.

### Polymer of the present invention

When the polymer of the present invention comprises two or more monomers as starting materials, the polymer may be a random copolymer or a block copolymer.

The homopolymer or copolymer of the present invention has a weight average molecular weight (MW) of 2000 to 100000, preferably 3000 to 80000, and more preferably 5000 to 60000. The weight average molecular weight can be measured by the GPC method using standard polystyrene.

### Method for producing the polymer

In the first preferable embodiment, the polymer used in the surface treatment agent of the present invention can be produced by homopolymerization or copolymerization of at least one linear hydrocarbon group-containing monomer represented by general formula (I), or copolymerization of at least one linear hydrocarbon group-containing monomer represented by general formula (I) with (A) at least one fluorine-containing monomer represented by general formula (II) and/or (B) at least one hydrophilic group-containing monomer.

In the second preferable embodiment, the polymer used in the surface treatment agent of the present invention may be produced by homopolymerization of the fluorine-containing monomer represented by general formula (II), or copolymerization of the fluorine-containing monomer represented by general formula (II) with (A) a linear hydrocarbon group-containing monomer, (B) a hydrophilic group-containing monomer, and/or (C) at least one monomer selected from the group consisting of branched hydrocarbon group-containing monomers, alicyclic hydrocarbon group-containing monomers, hetero-aliphatic group-containing or hetero-ring-containing monomers, and aromatic ring-containing monomers.

In the first preferable embodiment, a known method can be used as a method for homopolymerizing or copolymerizing at least one linear hydrocarbon group-containing monomer represented by general formula (I) with (A) at least one fluorine-containing monomer represented by general formula (II) and/or (B) at least one hydrophilic group-containing monomer. Examples include solution polymerization methods, emulsion polymerization methods, block-polymerization methods, etc.

In the second preferable embodiment, a known method can be used as a method for homopolymerizing the fluorine-containing monomer represented by general formula (II) or a method for copolymerizing the fluorine-containing monomer represented by general formula (II) with (A) a linear hydrocarbon group-containing monomer, (B) a hydrophilic group-containing monomer, and/or (C) at least one monomer selected from the group consisting of branched hydrocarbon group-containing monomers, alicyclic hydrocarbon group-containing monomers, hetero-aliphatic group-containing or hetero-ring-containing monomers, and aromatic ring-containing monomers. Examples include solution polymerization methods, emulsion polymerization methods, block-polymerization methods, etc.

The form of the surface treatment agent of the present invention is not particularly limited, and can be suitably selected according to the purpose. The surface treatment agent can be used in the form of a solution or emulsion, and preferably in the form of an aqueous emulsion. When the surface treatment agent is in the form of an aqueous emulsion, a copolymer produced by an emulsion polymerization method can be used as is, or can be used after diluted in water or a solvent.

In the emulsion polymerization method, monomers in desired proportions are emulsified in water in the presence of a polymerization initiator, an emulsifier, and a co-emulsifier, followed by stirring at 50 to 90°C for 1 to 10 hours, thus copolymerizing the monomers.

When the surface treatment agent of the present invention is in the form of an aqueous emulsion, it may contain an emulsifier, emulsion stabilizer, or chain transfer agent. As the emulsifier, emulsion stabilizer, and chain transfer agent, compounds that are the same as those used in the production by the emulsion polymerization can be used.

When the surface treatment agent of the present invention is in the form of a solution, the solvent is not particularly limited as long as the copolymer is dissolved. Examples include alcohols, such as methanol, ethanol, and isopropyl alcohol; ketones, such as acetone and methyl ethyl ketone; esters, such as ethyl acetate and butyl acetate; aromatic hydrocarbons, such as toluene and xylene; ethers, such as diethylether; alkylene glycol monoethers, such as diethylene glycol monoethyl ether; akylene glycol diethers, such as diethylene glycol diethylether; tetrahydrofuran; and 1,4-dioxane. These solvent components can be used alone or in a combination of two or more in any proportions.

The polymerization initiator is not particularly limited, and an organic peroxide, azo compound, persulfate, etc. can be used. The polymerization initiator is preferably a watersoluble azo compound, and 2,2'-azobis[N-(2-hydroxyethyl)-2-methylpropaneamide] is preferably used. The polymerization initiator can be used in an amount of 0.01 to 1 mass%, and preferably 0.05 to 1 mass% relative to the total monomer amount.

As the emulsifier, an anionic, cationic, or nonionic surfactant can be used. Nonionic surfactants are preferred, and a polyoxyethylene oxide addition type nonionic surfactant is preferred. Specific examples include reaction products of polyethylene oxide with alcohol (e.g., aliphatic alcohol and aromatic alcohol), alkyl ether, C₁₂₋₁₈ alkylamine oleic acid, sorbitan mono-fatty acid, and the like. The emulsifier is typically used in an amount of 1 to 40 mass%, and preferably 10 to 40 mass% relative to the total monomer amount.

Usable examples of emulsion stabilizers include alcohol-based compounds and glycol-based compounds. Examples of alcohol-based compounds include methanol, ethanol, isopropyl alcohol, and propanol. Examples of glycol-based compounds include ethylene glycol, polyethylene (N= 2 to 4 or more) glycol, propylene glycol, polypropylene (N= 2 to 4 or more) glycol, or their terminal monomethyl ethers; hexylene glycol; and propylene glycol adducts of glycerin. Preferably, isopropyl alcohol can be used. The emulsion stabilizer is typically used in an amount of 1 to 30 mass%, and preferably 5 to 20 mass% relative to the total monomer amount.

In emulsion polymerization, a chain transfer agent can also be used to adjust the molecular weight. For example, alkyl mercaptans, such as N-octylmercaptan, N-dodecyl mercaptan, and tert-dodecyl mercaptan are preferably used.

In solution polymerization, monomers are mixed in desired proportions, and a suitable amount of a polymerization initiator is added thereto, followed by stirring in the presence of a solvent at 60 to 100°C, e.g., at 85°C, for 3 to 15 hours to perform polymerization.

The solvent is not particularly limited as long as it can dissolve the copolymer. Examples include alcohols, such as methanol, ethanol, and isopropyl alcohol; ketones, such as acetone and methyl ethyl ketone; esters, such as ethyl acetate and butyl acetate; aromatic hydrocarbons, such as toluene and xylene; ethers, such as diethylether; alkylene glycol monoethers, such as diethylene glycol monoethyl ether; akylene glycol diethers, such as diethylene glycol diethylether; tetrahydrofuran; and 1,4-dioxane. These solvent components can be used alone or in a combination of two or more in any proportions.

### Surface treatment agent

As long as the purpose of the present invention is not impaired, the surface treatment agent of the present invention may suitably contain a rust prevention agent, catalyst, antibacterial agent, flame retardant, surfactant, antifoaming agent, thickener, viscosity modifier, leveling agent, ultraviolet ray absorbent, preservative, antifreezing agent, wetting agent, PH adjuster, stabilizer, antifungal agent, light-resistant stabilizer, weather-resistant stabilizer, neutralizer, matting agent, dry enhancer, foaming agent, non-adhesive, degradation inhibitor, etc.

The surface treatment agent of the present invention can be used as a mold-releasing agent, buffer, water and oil repellent, resin adhesion prevention agent, flux creep-up prevention agent, stain prevention agent, swelling prevention agent, and oil barrier agent. The molding material released from a mold using the surface treatment agent is not particularly limited. Examples include rubbers, such as urethane rubber, H-NBR, NBR, silicone rubber, EPDM, CR, NR, fluororubber, SBR, BR, IIR, and IR; thermosetting resins, such as urethane foam, epoxy resin, polyimide resin, polyamide resin, melamine resin, urea resin, polyurethane, silicone resin, alkyd resin, phenol resin, unsaturated polyester resin, vinyl ester resin, and FRP (glass fiber reinforced plastics (GFRP), carbon fiber reinforced plastics (CFRP), aramid fiber reinforced plastics (AFRP)); thermoplastic resins, such as PP (polypropylene), PE (polyethylene), PVC (polyvinyl chloride), PS (polystyrene), PA (polyamide), polyester, polycarbonate, ABS resin, poly(meth)acrylic acid, polyacetal, polyvinylidene fluoride, polyphenylene sulfide, polyether imide, polyether ether ketone, FRTP (glass fiber reinforced thermoplastics (GFRTP), carbon fiber reinforced thermoplastics (CFRTP), and aramid fiber reinforced thermoplastics (AFRTP)); etc. The surface treatment agent is particularly useful as a mold-releasing agent for resins such as FRP and rubbers including EPDM rubber and BR, and as a resin adhesion prevention agent and a buffer for resins such as FRP.

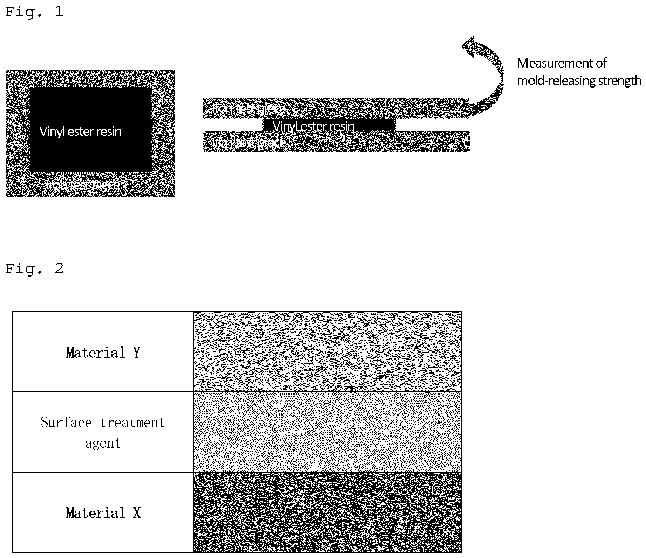

Fig. 2 shows an embodiment of using the surface treatment agent of the present invention as a buffer. The material X in Fig. 2 is not particularly limited, and examples include metal, such as aluminum, SUS, and iron; resins, such as PP, PE, and epoxy; rubbers; FRP (fiber reinforced plastics); gypsum substrates; wooden substrates; composite materials; etc. The material Y is not particularly limited, and rubber and resin can be used. Specific examples include rubbers, such as urethane rubber, H-NBR, NBR, silicone rubber, fluororubber, CR, NR, SBR, IIR, and IR; thermosetting resins, such as composite materials, urethane foam, epoxy resin, phenol resin, unsaturated polyester resin, and FRP; and thermoplastic resins, such as PP, PE, PVC, and PS.

The surface treatment agent of the present invention can be used as a mold-releasing agent by applying the surface treatment agent to the surface of the mold and drying the surface. The coating method is not particularly limited, and spray coating, brush coating, roll coater coating, and dipping coating can be used. In one example of a drying method, air drying or heating may be performed to evaporate a solvent, thus forming a film. The amount of a non-volatile component in a mold-releasing agent composition to be adhered to the mold is typically 0.01 to 10 g/m², and preferably 0.1 to 10 g/m². This ensures sufficient mold-releasability.

In a preferable embodiment of the present invention, the surface treatment agent can be used as a buffer for FRP. For example, in the process of autoclave molding, oven molding, or press molding of prepreg formed by immersing a thermosetting resin or thermoplastic resin in a carbon fiber (e.g., filament, knitting, or nonwoven fabric) or in the process of injection molding or press molding of short fiber pellets, long fiber pellets, or continuous fiber sheets formed by immersing a thermoplastic resin in a carbon fiber, the surface treatment agent of the present invention is applied to the surface of a material (e.g., mold for molding) that is in contact with FRP to prevent adhesion between the FRP and the material. Examples of thermosetting resins used for FRP include unsaturated polyester resin (UP), vinyl ester resin (VE), epoxy resin, and phenol resin (PF). Examples of thermoplastic resins include polycarbonate resin (PC), polyethylene resin (PE), polyester resin, polyamide resin (PA), and polyvinyl chloride resin (PVC).

### Examples

The present invention is detailed below with reference to the Examples; however, the present invention is not limited to the Examples.

### Synthesis Example 1A

6 parts by mass of a fluorine-containing polymerizable monomer, (A) 30.6 parts by mass of behenyl methacrylate, (B) 2 parts by mass of 2-hydroxyethyl methacrylate, 2 parts by mass of polyethylene glycol (N=4 on average) monomethacrylate (PE-200 produced by NOF Corporation), 0.2 parts by mass of lauryl mercaptan, 2 parts by mass of polyoxyethylene alkyl phenyl ether (Noigen EA-177 produced by Dai-Ichi Kogyo Seiyaku Co., Ltd.), 2 parts by mass of polyoxyethylene oleyl ether (Emulgen 408 produced by Kao Corp.), 4 parts by mass of isopropyl alcohol, and 151.2 parts by mass of ion exchange water were placed in a 200-ml glass reactor, and emulsified and mixed using a high-pressure homogenizer. The obtained emulsion was purged with a nitrogen gas for 30 minutes.

Thereafter, 20 parts by mass of an aqueous solution containing 1.5 mass% of 2,2'-azobis[N-(2-hydroxyethyl)-2-methylpropaneamide] was introduced into the emulsion. The inner temperature was gradually raised to 85°C, and reaction was performed for 3 hours while keeping the temperature. After the completion of the reaction, the resultant was allowed to cool, thereby obtaining an aqueous dispersion having a solids content of 22.3 mass%. The weight average molecular weight of the obtained copolymer was measured using gel permeation chromatography (GPC) (standard substance for measuring the molecular weight being polystyrene) and found to be 62000.

### Synthesis Examples 2A to 6A

A copolymer was produced in the same manner as in Synthesis Example 1A except that the proportions of the fluorine-containing monomer, monomer A (monomer of component (A)), and monomer B (monomer of component (B)) were changed. The proportions and kinds of the monomers are as shown in Table 1. In Table 1, the numeral of the proportion of the fluorine-containing monomer in the polymer represents mass%, and the numerals of F-1, A-1, A-2, A-3, A-4, B-1, B-2, and B-3 represent parts by mass.

### Example 1A

The obtained aqueous dispersion was diluted with ion exchange water to 1% on a mass basis, and a continued mold release test was performed using BR. Table 1 shows the results.

### Examples 2A to 3A and Comparative Examples 1A to 3A

In the same manner as in Example 1A, continued mold releasability was evaluated. Table 1 shows the evaluation results.

**Table 1**

| | Synthesis Example 1A | Synthesis Example 2A | Synthesis Example 3A | Synthesis Example 4A | Synthesis Example 5A | Synthesis Example 6A |
|---|---|---|---|---|---|---|
| | Example 1A | Example 2A | Example 3A | Comparative Example 1A | Comparative Example 2A | Comparative Example 3A |
| F-1 | 6 | 4 | | 22 | 22 | 22 |
| A-1 | 30.6 | 39 | 26 | | | |
| A-2 | | | | 4 | | |
| A-3 | | | | | 4 | |
| A-4 | | | | | | 4 |
| B-1 | 1.7 | 2 | 2 | 2 | 2 | 2 |
| B-2 | 1.7 | 2 | 2 | 2 | 2 | 2 |
| Proportion of fluorine-containing monomer | 15% | 8.50% | 0% | 73% | 73% | 73% |
| Molecular weight (MW) | 62000 | 58000 | 36000 | 21000 | 12000 | 31000 |
| Number of times of continued mold release | 2 | 4 | 3 | 1 | 0 | 0 |

| | | | | | | |
|---|---|---|---|---|---|---|
| F-1: C₉F₁₇OC₆H₄CO₂CH₂CH₂OC(=O)C(CH₃)=CH₂ A-1: Behenyl methacrylate A-2: Cyclohexyl methacrylate A-3: Tert-butyl methacrylate A-4: Benzyl methacrylate B-1: Polyethylene glycol (N=4 on average) monomethacrylate (PE-200 produced by NOF Corporation) B-2: 2-Hydorxyethyl methacrylate | | | | | | |

### Synthesis Example 1B

4 parts by mass of a fluorine-containing polymerizable monomer, (A) 16.9 parts by mass of hexyl methacrylate, (B) 2 parts by mass of 2-hydroxyethyl methacrylate, 2 parts by mass of polyethylene glycol (N=4 on average) monomethacrylate (PE-200 produced by NOF Corporation), 0.2 parts by mass of lauryl mercaptan, 2 parts by mass of polyoxyethylene alkyl phenyl ether (Noigen EA-177 produced by Dai-Ichi Kogyo Seiyaku Co., Ltd.), 2 parts by mass of polyoxyethylene oleyl ether (Emulgen 408 produced by Kao Corp.), 4 parts by mass of isopropyl alcohol, and 166.9 parts by mass of ion exchange water were placed in a 200-ml glass reactor, and emulsified and mixed using a high-pressure homogenizer. The obtained emulsion was purged with a nitrogen gas for 30 minutes.

Thereafter, 20 parts by mass of an aqueous solution containing 1.5 mass% of 2,2'-azobis[N-(2-hydroxyethyl)-2-methyl propaneamide] was introduced into the emulsion. The inner temperature was gradually raised to 85°C, and reaction was performed for 3 hours while keeping the temperature. After the completion of the reaction, the resultant was allowed to cool, thereby obtaining an aqueous dispersion having a solids content of 16.6 mass%. The weight average molecular weight of the obtained copolymer was measured using gel permeation chromatography (GPC) (standard substance for measuring the molecular weight being polystyrene) and found to be 54000.

### Synthesis Examples 2B to 10B and Synthesis Examples 1C to 14C

A copolymer was produced in the same manner as in Synthesis Example 1B except that the proportions of the fluorine-containing monomer, monomer A (linear hydrocarbon group-containing monomer of component (A)), and monomer B (hydrophilic group-containing monomer of component (B)) were changed. The proportions and kinds of the monomers are as shown in Tables 2, 4, 5, and 7. In Table 2, the numeral of the proportion of the fluorine-containing monomer in the polymer represents mass%, and the numerals of F-11, F-12, A-11, A-12, A-13, A-14, B-11, and B-12 represent parts by mass.

### Example 1B

The obtained aqueous dispersion was diluted with ion exchange water to 3% on a mass basis, and a mold release test was performed. The diluted aqueous dispersion (2.0 g) was applied, using a spray gun (Cup gun W-101 produced by Anest Iwata Corporation; caliber: 1 mm), to an iron mold (molding article shape: cylinder with a diameter of 3.0 cm and a height of 3.0 cm) heated to 180°C.

A peroxide-cured rubber (EPDM) (8.0 g) was placed in a mold and press-molded at 180°C for 8 minutes. A load applied for removing the molding product was measured using a push-pull scale, thereby evaluating mold releasability.

After the molding product was removed, the rubber was again placed in the mold and press-molded in the same manner, thereby examining continued mold releasability. The number of times of mold release until the load exceeded 50 N was referred to as the number of times of continued mold release. Table 2 shows the results.

### Examples 2B to 4B and Comparative Examples 1B to 2B

In the same manner as in Example 1B, mold releasability and continued mold releasability were evaluated. Table 2 shows the evaluation results.

### Example 5B

A tetrahydrofuran solution containing 1 mass% of the copolymer of Synthesis Example 2B was prepared, and the solution was applied to a test piece of stainless steel (SUS). After the test piece was dried at room temperature, the contact angles of water and hexadecane relative to the coating surface were measured using a contact angle measuring device (DROPMASTER 700 produced by Kyowa Interface Science Co., Ltd.). Table 3 shows the evaluation results.

### Examples 6B to 9B

Mold releasability and continued mold releasability were evaluated in the same manner as in Example 1B except that the kind of rubber was changed from EPDM rubber to BR. Table 4 shows the evaluation results.

**Table 2**

| | Synthesis Example 1B | Synthesis Example 2B | Synthesis Example 3B | Synthesis Example 4B | Synthesis Example 5B | Synthesis Example 6B |
|---|---|---|---|---|---|---|
| | Example 1B | Example 2B | Example 3B | Example 4B | Comparative Example 1B | Comparative Example 2B |
| F-11 | 4 | | 26 | 16 | 4 | 4 |
| F-12 | | 16 | | | | |
| A-11 | | | | | | |
| A-12 | | 10 | | 10 | | |
| A-13 | | | | | 33.5 | |
| A-14 | | | | | | 25.2 |
| B-11 | 2 | 2 | 2 | | 2 | 2 |
| B-12 | 2 | 2 | 2 | | 2 | 2 |
| Proportion of fluorine-containing monomer (mass) | 16% | 53% | 87% | 62% | 10% | 12% |
| Molecular weight (MW) | 54000 | 31000 | 6000 | 17000 | 51000 | 52000 |
| Number of times of continued mold release | 2 | 14 | 15 | 9 | 0 | 0 |

| | | | | | | |
|---|---|---|---|---|---|---|
| F-11: C₉F₁₇OC₆H₄CO₂CH₂CH₂OC (=O)C (CH₃)=CH₂ F-12: C₉F₁₇OC₆H₄CO₂CH₂CH₂OC (=O)CH=CH₂ A-11: Hexylmethacrylate (hexyl MA) A-12: Lauryl acrylate (lauryl A) A-13: Stearyl methacrylate (stearyl MA) A-14: Lauryl methacrylate (lauryl MA) B-11: 2-Hydorxyethyl methacrylate B-12: Polyethyleneglycol (N=4 on average) monomethacrylate (PE-200 produced by NOF Corporation) | | | | | | |

**Table 3**

| | Copolymer | Contact angle | |
|---|---|---|---|
| | | Water | Hexadecane |
| Example 5B | Synthesis Example 2B | 114° | 74° |

A hexadecane contact angle of 74° is a highly desirable value. The fluorine-based surface treatment agent of the present invention is considered to have excellent mold releasability.

**Table 4**

| | Synthesis Example 7B | Synthesis Example 8B | Synthesis Example 9B | Synthesis Example 10B |
|---|---|---|---|---|
| | Example 6B | Example 7B | Example 8B | Example 9B |
| F-11 | 6 | 8 | 10 | 22 |
| A-15 | 30.6 | 28.6 | 16 | 4 |
| B-11 | 1.7 | 1.7 | 2 | 2 |
| B-12 | 1.7 | 1.7 | 2 | 2 |
| Proportion of fluorine-containing monomer (mass) | 15% | 20% | 53% | 73% |
| Molecular weight (MW) | 62000 | 41000 | 31000 | 21000 |
| Number of times of continued mold release | 2 | 2 | 6 | 12 |

| | | | | |
|---|---|---|---|---|
| F-11: C₉F₁₇OC₆H₄CO₂CH₂CH₂OC(=O)C(CH₃)=CH₂ A-15: Behenyl methacrylate (behenyl MA) B-11: 2-Hydroxyethyl methacrylate B-12: Polyethyleneglycol (N=4 on average) monomethacrylate (PE-200 produced by NOF Corporation) | | | | |

### Example 1C

Using each fluorine acrylate shown in Table 5, a mold release test was performed under the following evaluation conditions and method.

### (1) Evaluation conditions

Resin starting material: Vinyl ester resin (FRP)
Molding machine: Hydraulic molding machine (70-ton pressing machine)
Press pressure: 0.8 to 1.5 MPa
Pressure time: 2 minutes
Evaluation mold: Test mold made of chrome-plated iron
Mold temperature: 140°C
Coating amount of mold-releasing agent: About 150 g/m² Mold-releasing agent coating device: W-101 (Cup gun, air pressure: 0.2 MPa) produced by Anest Iwata Corporation (2) Evaluation method

### - Mold release test

(1) The mold-releasing agent was applied to a heated mold.
(2) The resin starting material was placed in the mold and cured under heating and pressure conditions.
(3) After the resin starting material was cured, a suction cup was attached to the molding article. The load applied for peeling off the molding article from the mold was measured and regarded as the mold-releasing strength. The practical operation level of mold-releasing strength is 60 N or less.

### - Secondary processability (coating property) test

(1) Spray coating was performed on the surface of the molding article that had been in contact with the mold.
(2) The surface was allowed to stand at room temperature for 24 hours until the coating was dry.
(3) Cross-cuts including 11 longitudinal lines and 11 horizontal lines were made on the coating surface with a utility knife (so that a total of 100 squares were made).
(4) Adhesive tape was applied on the cross-cut portion.
(5) The tape was peeled off, and it was confirmed whether the coating on the squares was peeled off.

In the evaluation of coating properties, "0" indicates that the coating was not peeled off, "x" indicates that the coating was peeled off, and "-" indicates that the test was not performed.

In Synthesis Examples 1C to 12C, copolymers were produced in the same manner as in Synthesis Example 1B except that the proportions of the fluorine acrylate, alkyl acrylate, and hydrophilic acrylate were changed.

Table 5 shows the results.

**Table 5**

| Mold release test results | | | | | | | | |
|---|---|---|---|---|---|---|---|---|
| | Fluorine acrylate | Alkyl acrylate | Hydrophilic acrylate | | Monomer ratio (WT%) | Molecular weight MW | Mold release strength (N) | Secondary processability (coating property) |
| Synthesis Example 1C | - | Behenyl MA | 2-HEMA | PE-200 | 0:19.5:1:1 | 37000 | 44 | ○ |
| Synthesis Example 2C | F-11 | N-hexyl MA | 2-HEMA | PE-200 | 2:8.5:1:1 | 24000 | 10 | - |
| Synthesis Example 3C | F-11 | Lauryl MA | 2-HEMA | PE-200 | 2:12.6:1:1 | 32000 | 34 | - |
| Synthesis Example 4C | F-11 | Behenyl MA | 2-HEMA | PE-200 | 2:19.5:1:1 | 58000 | 8 | ○ |
| Synthesis Example 5C | F-11 | Lauryl MA | 2-HEMA | PE-200 | 5:8:1:1 | 24000 | 3 | - |
| Synthesis Example 6C | F-11 | Stearyl MA | 2-HEMA | PE-200 | 5:8:1:1 | 24000 | 19 | ○ |
| Synthesis Example 7C | F-11 | Cyclohexyl MA | 2-HEMA | PE-200 | 8:5:1:1 | 19000 | 6 | - |
| Synthesis Example 8C | F-11 | Allyl MA | 2-HEMA | PE-200 | 11:2:1:1 | 13000 | 9 | - |
| Synthesis Example 9C | F-11 | Behenyl MA | 2-HEMA | PE-200 | 11:2:1:1 | 14000 | 12 | ○ |
| Synthesis Example 10C | F-11 | Tert-butyl MA | 2-HEMA | PE-200 | 11:2:1:1 | 9000 | 27 | - |
| Synthesis Example 11C | F-11 | BZMA | 2-HEMA | PE-200 | 11:2:1:1 | 20000 | 53 | ○ |
| Synthesis Example 12C | F-11 | - | 2-HEMA | PE-200 | 13:0:1:1 | 5000 | 6 | - |

| | | | | | | | | |
|---|---|---|---|---|---|---|---|---|
| F-11: C₉F₁₇OC₆H₄CO₂CH₂CH₂OC(=O)C(CH₃)=CH₂ Behenyl MA: Behenyl methacrylate Tert-butyl MA: Tert-butyl methacrylate Allyl MA: Allyl methacrylate Lauryl MA: Lauryl methacrylate Isobornyl MA: Isobornyl methacrylate Cyclohexyl MA: Cyclohexyl methacrylate N-hexyl MA: N-hexyl methacrylate Stearyl MA: Stearyl methacrylate BZMA: Benzyl methacrylate 2-HEMA: 2-Hydroxyethyl methacrylate | | | | | | | | |

### Examples 2C to 3C and Comparative Examples 1C to 2C

Using each of the fluorine acrylate surface treatment agents (Synthesis Examples 4C and 11C) and fluorine monomolecular compounds (F-21 and F-22) shown in Table 6, test pieces were subjected to a mold release test under the following evaluation conditions and method twice. Table 6 shows the evaluation results.

### (1) Evaluation conditions

Resin starting material: vinyl ester resin (FRP)
Molding machine: Hydraulic molding machine (70-ton pressing machine)
Press pressure: 0.2 MPa
Pressure time: 2 minutes
Evaluation mold: Iron test piece SPCC-SB
Mold temperature: 140°C
Coating amount of mold-releasing agent: About 150 g/m²
Mold-releasing agent coating device: W-101 (Cup gun, air pressure: 0.2 MPa) produced by Anest Iwata Corporation

### (2) Evaluation method (Fig. 1)

(1) The mold-releasing agent was applied to heated test pieces.
(2) The resin starting material was placed between the test pieces and cured under heating and pressure conditions.
(3) After the resin starting material was cured, the load applied for peeling off the test pieces from the molding article was measured and regarded as the mold-releasing strength.

**Table 6**

| | | Example 2C | Example 3C | Comparative Example 1C | Comparative Example 2C |
|---|---|---|---|---|---|
| Evaluation results | | Synthesis Example 4C | Synthesis Example 11C | F-21 | F-22 |
| Mold-releasing strength | First | 6 | 12 | 17 | 12 |
| | Second | 7 | 10 | 16 | 14 |
| Resin remaining on the test pieces after test (visually observed) | | None | None | Remained | Remained |

| | | | | | |
|---|---|---|---|---|---|
| F-21: C₉F₁₇O(C₂H₄O)NCH₃ (N=22 on average) F-22: C₉F₁₇O(C₂H₄O)NCH₃ (N=12 on average) | | | | | |

As shown in Table 6, the resin remained on the test pieces (stuck to the mold) in Comparative Examples 1C and 2C, in which the monomolecular fluorinated nonion-based surfactant was used as a mold-releasing agent; however, the resin did not remain on the test pieces when the surface treatment agent of the polymer of Example 2C or 3C was used.

### Example 4C

Using each fluorine acrylate shown in Table 7, a mold release test was performed under the following evaluation conditions and method.

### (1) Evaluation conditions

Resin starting material: Epoxy resin
Heating time: 40 minutes
Evaluation mold: Test mold made of chrome-plated iron
Mold temperature: 135 to 145°C
Coating amount of mold-releasing agent: About 150 g/m²
Mold-releasing agent coating device: W-101 (Cup gun, air pressure: 0.2 MPa) produced by Anest Iwata Corporation.

### (2) Evaluation method

### - Mold release test

(1) The mold-releasing agent was applied to the heated mold.
(2) The resin starting material was poured into the mold equipped with a clip, and cured by heating.
(3) After the resin starting material was cured, the clip was pulled. The load applied for peeling off the molding article from the mold was measured and regarded as a mold-releasing strength. The practical operation level of mold-releasing strength is 60 N or less.

### - Secondary processability (coating property) test

(1) Spray coating was performed on the surface of the molding article that had been in contact with the mold.
(2) The surface was allowed to stand at room temperature for 24 hours until the coating was dried.
(3) Adhesive tape was applied to the coated molding article surface.
(4) The tape was peeled off, and it was confirmed whether the coating was peeled off.

In the evaluation of coating properties, "0" indicates that the coating was not peeled off, "x" indicates that the coating was peeled off, and "-" indicates that the test was not performed.

Table 7 shows the results.

**Table 7**

| Mold release test results and secondary processability confirmation results | | | | | | | | |
|---|---|---|---|---|---|---|---|---|
| | Fluorine acrylate | Alkyl acrylate | Hydrophilic acrylate | | Monomer ratio (WT%) | Molecular weight MW | Mold releasing strength (N) | Secondary processability (coating property) |
| Synthesis Example 13C | F-11 | Lauryl MA | 2-HEMA | PE-200 | 0:12.6:1:1 | 25000 | 18 | ○ |
| Synthesis Example 3C | F-11 | Lauryl MA | 2-HEMA | PE-200 | 2:12.6:1:1 | 52000 | 18 | ○ |
| Synthesis Example 4C | F-11 | Behenyl MA | 2-HEMA | PE-200 | 2:19.5:1:1 | 58000 | 30 | ○ |
| Synthesis Example 5C | F-11 | Lauryl MA | 2-HEMA | PE-200 | 5:8:1:1 | 38000 | 15 | ○ |
| Synthesis Example 6C | F-11 | Stearyl MA | 2-HEMA | PE-200 | 5:8:1:1 | 35000 | 20 | ○ |
| Synthesis Example 14C | F-11 | Lauryl MA | 2-HEMA | PE-200 | 8:5:1:1 | 25000 | 23 | ○ |
| Synthesis Example 10C | F-11 | Tert-butyl MA | 2-HEMA | PE-200 | 11:2:1:1 | 12000 | 58 | - |

| | | | | | | | | |
|---|---|---|---|---|---|---|---|---|
| Lauryl MA: Lauryl methacrylate Stearyl MA: Stearyl methacrylate Tert-butyl MA: Tert butyl methacrylate Behenyl MA: Behenyl methacrylate F-11: C₉F₁₇OC₆H₄CO₂CH₂CH₂OC (=0) C (CH₃)=CH₂ 2-HEMA: 2-hydroxyethyl methacrylate | | | | | | | | |

## Claims

1. A surface treatment agent comprising a polymer according to any one of the following formulae (I) to (III):
(I) a polymer comprising, as a recurring unit, at least one linear hydrocarbon group-containing monomer represented by general formula (I):
CH₃-(CH₂)_{N}-OC(=O)-CR^{1A}=CH₂ (I)
wherein R^{1A} is H or methyl and N is 1 to 24;
(II) a polymer comprising, as a recurring unit, at least one fluorine-containing monomer represented by general formula (II):
RFO-R^{1B}-OC(=O)-CR²=CH₂ (II)
wherein RF is a group represented by the following formula (1) or (2) : 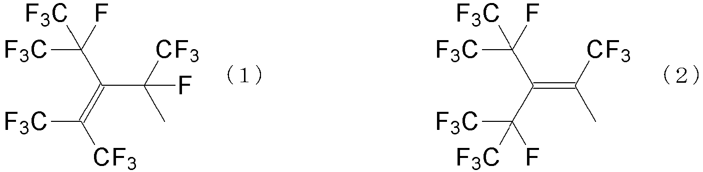 R^{1B} is a divalent group having a carbon atom number of 2 to 50, and R² is H or methyl, and
the proportion of the fluorine-containing monomer being 15% or more on a mass basis; and
(III) a polymer comprising, as a recurring unit, the at least one linear hydrocarbon group-containing monomer represented by general formula (I) and the at least one fluorine-containing monomer represented by general formula (II), and
the proportion of the fluorine-containing monomer being 0% or more to 15% or less on a mass basis.

2. The surface treatment agent according to claim 1, comprising a polymer according to the following formula (I) or (III) :
(I) a polymer comprising, as a recurring unit, at least one linear hydrocarbon group-containing monomer represented by general formula (I):
CH₃-(CH₂)_{N}-OC(=O)-CR^{1A}=CH₂ (I)
wherein R^{1A} is H or methyl and N is 1 to 24; or
(III) a polymer comprising, as a recurring unit, the at least one linear hydrocarbon group-containing monomer represented by general formula (I) and the at least one fluorine-containing monomer represented by general formula (II) above, and
the proportion of the fluorine-containing monomer being 0% or more to 15% or less on a mass basis.

3. The surface treatment agent according to claim 1, comprising a polymer according to the following formula (II):
(II) a polymer comprising, as a recurring unit, at least one fluorine-containing monomer represented by general formula (II):
RFO-R^{1B}-OC(=O)-CR²=CH₂ (II)
wherein RF is a group represented by the following formula (1) or (2), 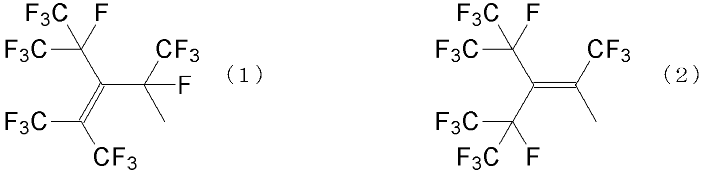 R^{1B} is a divalent group having a carbon atom number of 2 to 50, and R² is H or methyl, and
the proportion of the fluorine-containing monomer being 15% or more on a mass basis.

4. The surface treatment agent according to claim 2, wherein the polymer comprises, as a recurring unit,
the linear hydrocarbon group-containing monomer represented by general formula (I),
(A) the fluorine-containing monomer represented by general formula (II), and/or
(B) a hydrophilic group-containing monomer.

5. The surface treatment agent according to claim 3, wherein the polymer is a copolymer comprising, as a recurring unit, the fluorine-containing monomer represented by general formula (II) and the following monomers (A), (B), and/or (C):
(A) a linear hydrocarbon group-containing monomer,
(B) a hydrophilic group-containing monomer, and/or
(C) at least one monomer selected from the group consisting of branched hydrocarbon group-containing monomers, alicyclic hydrocarbon group-containing monomers, hetero-aliphatic group-containing or hetero-ring-containing monomers, and aromatic ring-containing monomers.

6. The surface treatment agent according to any one of claims 1 to 5, wherein the linear hydrocarbon group-containing monomer represented by general formula (I) includes one or more (meth)acrylates.

7. The surface treatment agent according to claim 1 or 2, wherein the linear hydrocarbon group-containing monomer (A) includes one or more (meth)acrylates represented by general formula (I):
CH₃-(CH₂)_{N}-OC(=O)-CR^{1A}=CH₂ (I)
wherein R^{1A} is H or methyl and N is 1 to 24.

8. The surface treatment agent according to claim 4 or 5, wherein the hydrophilic group-containing monomer (B) is a monomer having a hydroxy group and/or a polyethylene oxide chain.

9. The surface treatment agent according to any one of claims 1 to 8, which is an aqueous emulsion.

10. The surface treatment agent according to any one of claims 1 to 9, wherein the surface treatment agent is a mold-releasing agent.

11. The surface treatment agent according to claim 10, wherein the surface treatment agent is a mold-releasing agent for butadiene rubber (BR).

12. The surface treatment agent according to claim 10, wherein the surface treatment agent is a mold-releasing agent for butadiene rubber (BR) or EPDM rubber.

13. The surface treatment agent according to claim 10, wherein the surface treatment agent is a mold-releasing agent for thermosetting resins.

14. The surface treatment agent according to any one of claims 1 to 9, wherein the surface treatment agent is a water and oil repellent agent.

15. The surface treatment agent according to any one of claims 1 to 9, wherein the surface treatment agent is a buffer.

16. The surface treatment agent according to any one of claims 1 to 9, wherein the surface treatment agent is a resin adhesion prevention agent.

17. A method for producing a surface treatment agent, comprising the step of polymerizing a linear hydrocarbon group-containing monomer represented by general formula (I):
CH₃-(CH₂)_{N}-OC(=O)-CR^{1A}=CH₂ (I)
wherein R^{1A} is H or methyl and N is 1 to 24, optionally with
(A) a fluorine-containing monomer represented by general formula (II):
RFO-R^{1B}-OC(=O)-CR²=CH₂ (II)
wherein RF is a group represented by the following formula (1) or (2) : 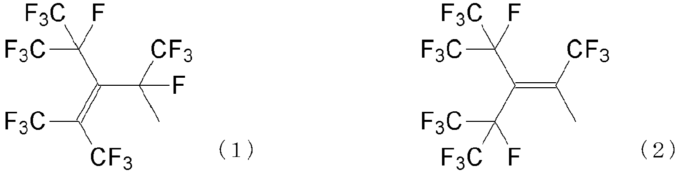 R^{1B} is a divalent group having a carbon atom number of 2 to 50, and R² is H or methyl, and
the proportion of the fluorine-containing monomer in the polymer being 0% or more to 15% or less on a mass basis; and/or
(B) a hydrophilic group-containing monomer.

18. A method for producing a surface treatment agent, comprising:
the step of homopolymerizing a fluorine-containing monomer represented by general formula (II):
RFO-R^{1B}-OC(=O)-CR²=CH₂ (II)
wherein RF is a group represented by the following formula (1) of (2) : 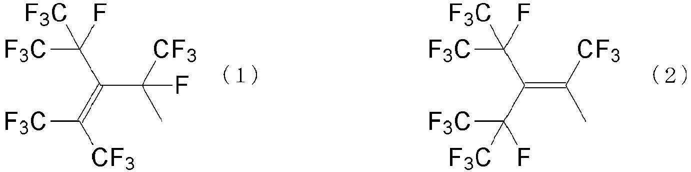 R^{1B} is a divalent group having a carbon atom number of 2 to 50, and R² is H or methyl, or
the step of copolymerizing the fluorine-containing monomer with (A) a linear hydrocarbon group-containing monomer, (B) a hydrophilic group-containing monomer, and/or (C) at least one monomer selected from the group consisting of branched hydrocarbon group-containing monomers, alicyclic hydrocarbon group-containing monomers, hetero-aliphatic group-containing or hetero-ring-containing monomers, and aromatic ring-containing monomers, to obtain a polymer comprising the fluorine-containing monomer as a recurring unit, wherein the proportion of the fluorine-containing monomer in the polymer is 15 mass% or more.
